# EUROPEAN PATENT APPLICATION

(11) **EP 3 399 090 A1**
(43) Date of publication of application: **07.11.2018**
(21) Application number: 18170356.2
(22) Date of filing: 02.05.2018
(51) Int. Cl.: D06F 25/00, D06F 29/00, D06F 31/00, D06F 95/00

(54) **CLOTHES CLEANING SYSTEM**

(30) Priority: 03.05.2017 TW 106114705
(71) Applicant: Kang, Chien-Chung, New Taipei City 241 (TW)
(72) Inventor: Kang, Chien-Chung, New Taipei City 241 (TW)
(74) Representative: Viering, Jentschura & Partner mbB Patent- und Rechtsanwälte

(57) **Abstract**

A clothes cleaning system (1), including at least one laundry cleaning machine (111) equipped with a mechanical arm (112) and at least one laundry container (113). The clothes cleaning system (1) utilizes the computer controlled mechanical arm (112) to extract laundry items for loading or unloading the laundry cleaning machine (111). Users only need to place their laundry into the laundry container (113), wait for the cleaning process to complete and then take back their cleaned laundry. The clothes cleaning system (1) may also include a robotic folding mechanism (121) to fold laundry items before storage. The clothes cleaning system (1) can also incorporate a storage system (141) with a mechanical arm (142) to place the basket (13) to a location designated by a computer. The clothes cleaning system (1) may also include a robotic laundry hanging system (16) equipped with a robotic arm (162), which can hang individual items to air dry. The clothes cleaning system (1) can also include a customer interface (17), which can recognize customers and their laundry container code when receiving or returning laundry to the customer. The clothes cleaning system (1) can also incorporate a heat exchanger system to recover waste heat for recycling in the system (1).

## Description

### CROSS REFERENCE TO RELATED APPLICATIONS

This Non-provisional application claims priority under 35 U.S.C. §119(a) on Patent Application No. 106114705 filed in Taiwan, Republic of China on May 3, 2017, the entire contents of which are hereby incorporated by reference.

### BACKGROUND

### 1. Technical Field

This invention is regarding a clothes cleaning system. By utilizing a robotic laundry cleaning machine equipped with a computer controlled mechanical arm to move laundry in and out of at least one laundry cleaning machine, users only need to place their laundry into the laundry container, wait for the cleaning process to complete and then take back their cleaned laundry with the benefit of automatic laundry washing and/or drying.

### 2. Description of Related Art

Laundry cleaning machines on the domestic household market and machines on the commercial coin-laundromat market today require human labor to put laundry in or take out from the laundry cleaning machine. Existing systems lack automated operation to facilitate convenient use. Besides, current clothes cleaning systems (laundry washing machine without robotic arms, for example, ordinary washers or dryers) require human labor to close the door after putting laundry in, and do not have the ability to identify which customer is retrieving their laundry. Existing laundry machines also lack heat recycling ability with which to dry laundry faster and/or preheat water for the washing cycle.

Several design challenges listed below have not yet been tackled by the laundry machine industry. 1. The provision of a laundry container conveying device to transport laundry containers within the system. 2. The provision of a method for loading and unloading washing machines and clothes dryers from laundry container. 3. The provision of a system to identify which customer is collecting or loading their laundry, and to identify which laundry belongs to them. 4. Heat recycling ability to dry laundry faster and/or preheat water for washing cycle.

### SUMMARY OF THE INVENTION

A clothes cleaning system, including at least one laundry cleaning machine equipped with a mechanical arm and at least one laundry container. The clothes cleaning system utilizes the computer controlled mechanical arm to extract by grabbing or sucking laundry items for loading or unloading the laundry cleaning machine. Computer is defined as any programmer device such as microchips or PC. Users only need to place their laundry into the laundry container, wait for the cleaning process to complete and then take back their cleaned laundry. The clothes cleaning system may also include a robotic folding mechanism to fold laundry items before storage. The clothes cleaning system can also incorporate a storage system with a mechanical arm to place the basket to a location designated by a computer. The clothes cleaning system may also include a robotic laundry hanging system equipped with a robotic arm, which can hang individual items to air dry. The clothes cleaning system can also include a customer interface, which can recognize customers and their laundry container code when receiving or returning laundry to the customer. The clothes cleaning system can also incorporate a heat exchanger system, which will recover waste heat from the washer and dryer. This heat can then be used to help air dry laundry items and to preheat water used in the washing process.

### BRIEF DESCRIPTION OF THE DRAWINGS

The parts in the drawings are not necessarily drawn to scale, the emphasis instead being placed upon clearly illustrating the principles of at least one embodiment. In the drawings, like reference numerals designate corresponding parts throughout the various diagrams, and all the diagrams are schematic.
FIG. 1 is a perspective view of the clothes cleaning system of this invention.
FIG. 2 is the flow chart illustrating the procedure for laundry washing and drying.
FIG. 3A and 3B are the perspective view of applicable conveying mechanism.
FIG. 3C is the perspective view of positioning receptacle.
FIG. 4 is the perspective view for illustrating the robotic arm presorting laundry into several laundry containers.
FIG. 5A, 5B and 5C are the perspective view of applicable variation of robotic arm of robotic laundry cleaning system.
FIG. 6A and 6B are the perspective view of door opening and closing using track or robotic arm.
FIG. 7A and 7B are the perspective view of applicable variation of laundry container as laundry container and/ or laundry bag.
FIG. 8 is the perspective view of the robotic clothes folding mechanism.
FIG. 9 is the perspective view of the laundry container moving along a track and robotic arm moving them in and out of the storage system.
FIG. 10 is the flow chart illustrating the procedure for robotic storage system.
FIG. 11A and 11B are the perspective view of the robotic clothes hanging mechanism.
FIG. 12 is the partially-cut perspective view of the computerized customer interface.
FIG. 13 is the flow chart illustrating the procedure of receiving laundry via computerized customer interface.
FIG. 14 is the flow chart illustrating the procedure for returning laundry via computerized customer interface.
FIG. 15 is the perspective view of the heat exchanger system.
FIG. 16A, 16B and 16C are the perspective view of different configuration of robotic laundry cleaning machine in the same zone.
FIG. 17 is the perspective view of different configuration of robotic laundry cleaning machine in different zone.
FIG. 18 is the perspective view of the external framework of the clothes cleaning system.
FIG. 19 is the perspective view of the clothes cleaning system with door of laundry cleaning machine facing upward.
FIG. 20 is the perspective view of the frame for installing the laundry cleaning machine.
FIG. 21 is the perspective view of the external framework, track and internal frame for transporting laundry container.
FIG. 22 is the perspective view of the returning port for laundry container installed on the side of the robotic storing system.
FIG. 23 is the perspective view of the laundry receiving/ returning port installed in another location, relying on a passage way for transferring laundry.

### DETAILED DESCRIPTION

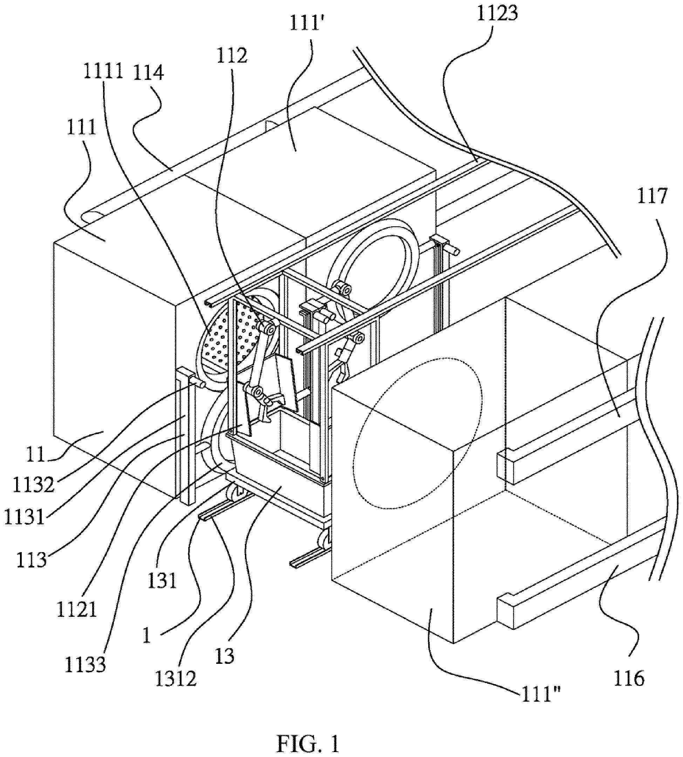

Refer to FIG. 1, the clothes cleaning system 1 comprising:
At least one robotic laundry cleaning machine 11 which consists of a laundry cleaning machine 111 and at least one robotic arm 112. The laundry cleaning machine 111 can be a washer 111', dryer 111" or all-in-one washer and dryer 111'" for cleaning and/or drying laundry 12. The robotic arm 112 is used for grabbing or sucking laundry items and transferring them between laundry container 13 and the opening 1111 of the laundry cleaning machine 111.

The robotic arm 112 may include a track 1123 to allow moving back and forth between laundry cleaning machine 111 for conveying laundry container 13 and loading and removing laundry between laundry container 13 and laundry cleaning machine 111. The laundry container may include an identification code which is a number, barcode, or RFID.

The laundry container 13 is constructed with an accommodation space and an opening for storing laundry 12.

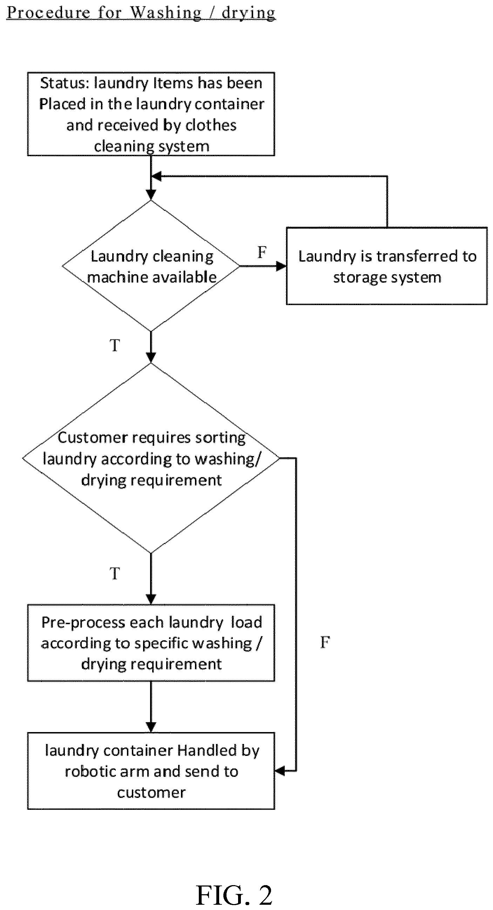

Referring to FIG. 2, the clothes cleaning system 1 utilizes robotic laundry cleaning machine 11 to wash and dry laundry. The user only need to place their laundry 12 into laundry container 13 and they can wait for the system to complete the task and retrieve clean laundry from the system. The computerized washing and/or drying procedure is as follows: Step 1, Verify if there is washer / dryer available for use to determine if the laundry container 13 can be sent to laundry cleaning machine 111 or sent to the storage system 141 for future washing. Step 2, Verify if laundry needs to be sorted and cleaned according to different types of laundry. Step 3, Start washing / drying of that laundry.

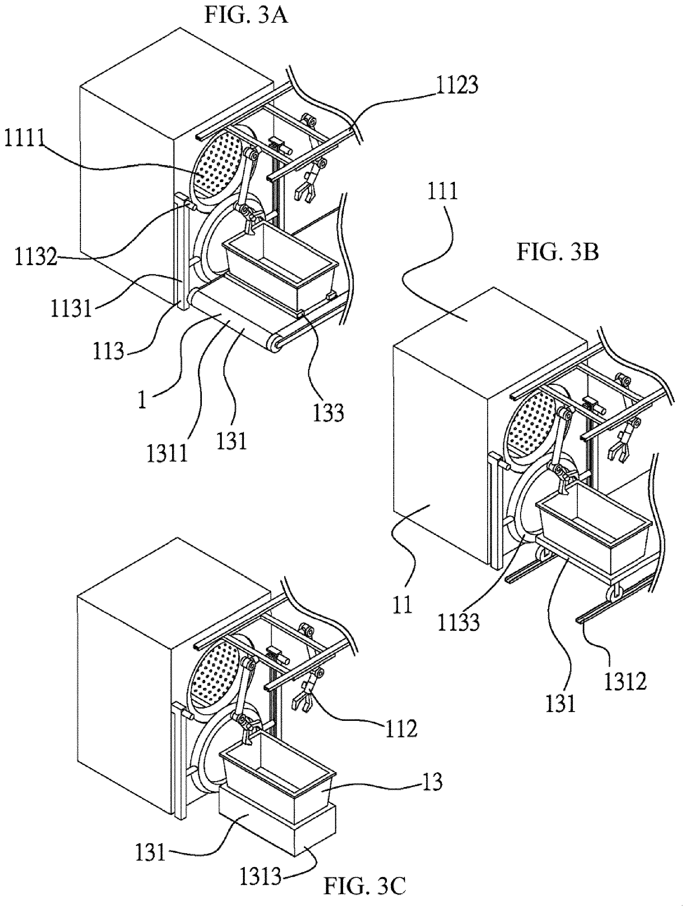

Referring to FIG 3A and 3B, a laundry container conveying device 131, such as a conveyer belt 1311 or a track 1312, can be placed near the opening of the laundry cleaning machine 11 and convey laundry container 13 to the opening of the laundry cleaning machine 11 based on computer instruction. The robotic arm can also put laundry into and remove laundry from the laundry cleaning machine 11. The laundry conveying device 131 may include positioning feature 133 to ensure secure transport during conveying.

Such track 1312 can also be a virtual track to allow a computer guided cart to transport laundry container 13 according to a route determined by computer program. The computer guided cart can also be simplified and defined as a transport device on the laundry container 13, for example, a computer guided wheel.

Referring to FIG. 3C, a positioning receptacle 1313 enables the user to manually position the laundry container 13 manually besides the opening 1111 to allow robotic arm 112 installed around the door to handle laundry loading and unloading.

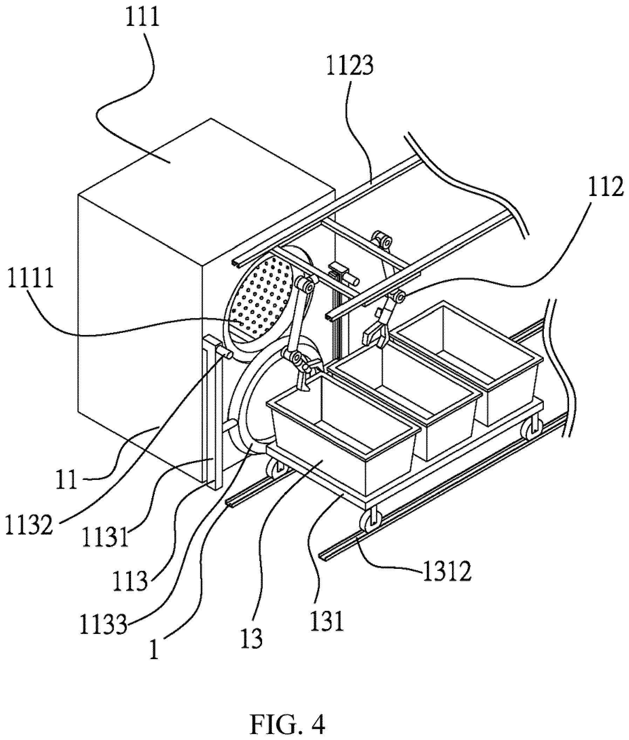

Referring to FIG. 4, The robotic arm 112 or the robotic laundry cleaning machine 11 can presort the laundry 13 in to several laundry containers 13 in order to apply a different laundry cleaning procedure on different types of laundry.

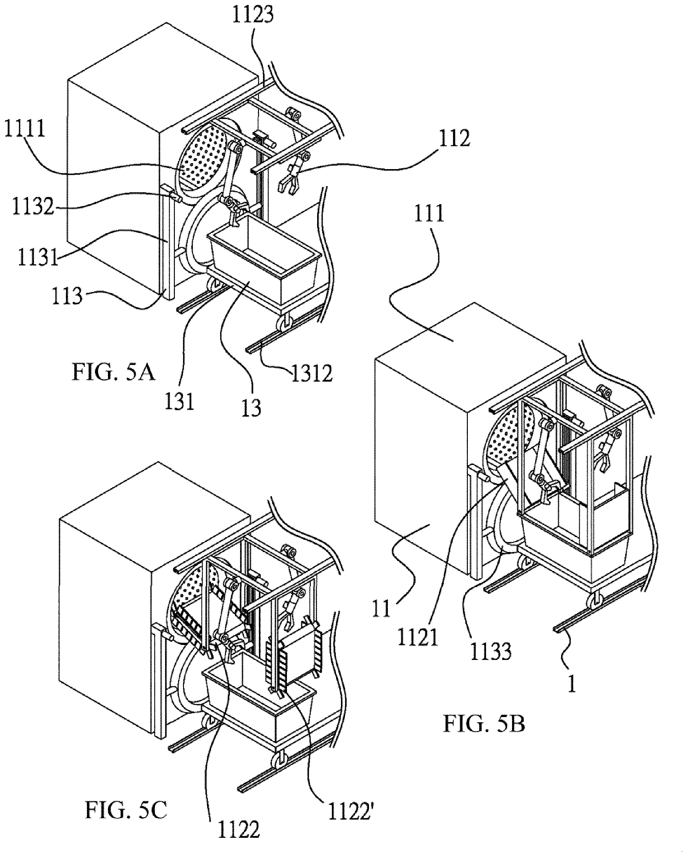

Referring to FIG. 5A, at least one robot arm is placed near the opening of the robotic laundry cleaning machine 11 to load and unload the laundry 12 from the laundry cleaning machine 11.

Referring to FIG. 5B, a barrier panel 1121 may be included to avoid laundry falling out during laundry loading and unloading.

Referring to FIG. 5C, a conveying device 1122 can be installed near the opening to load and unload laundry.

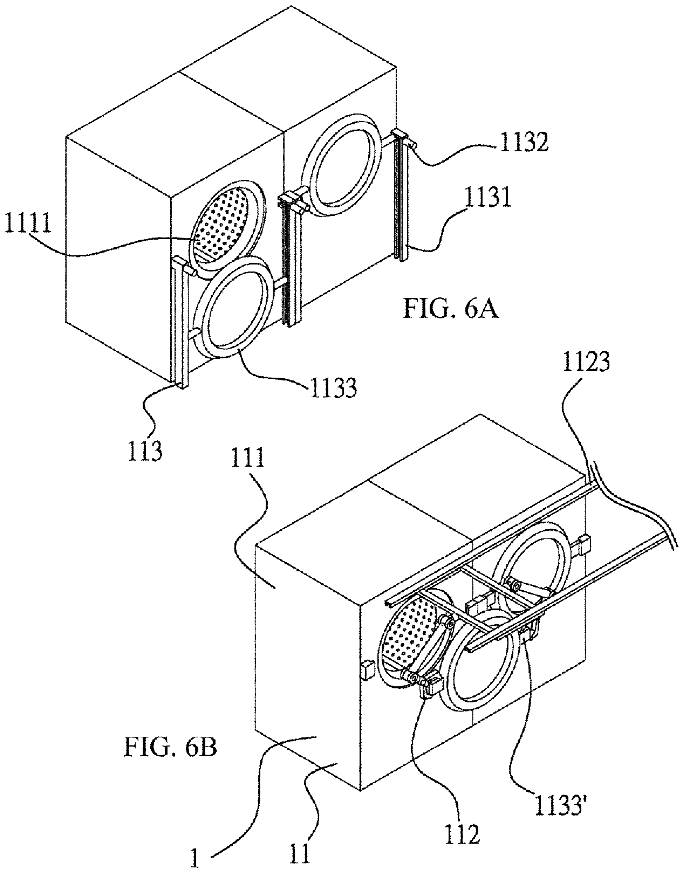

Referring to FIG. 6A, the door 1133 of the robotic laundry cleaning machine 11 can be moved in to place using a door track 113 and a track conveying mechanism 1132 to facilitate automatic door opening and closing.

Referring to FIG. 6B, the door 1133 can also be stored in another location and retrieved by using robotic arm 112.

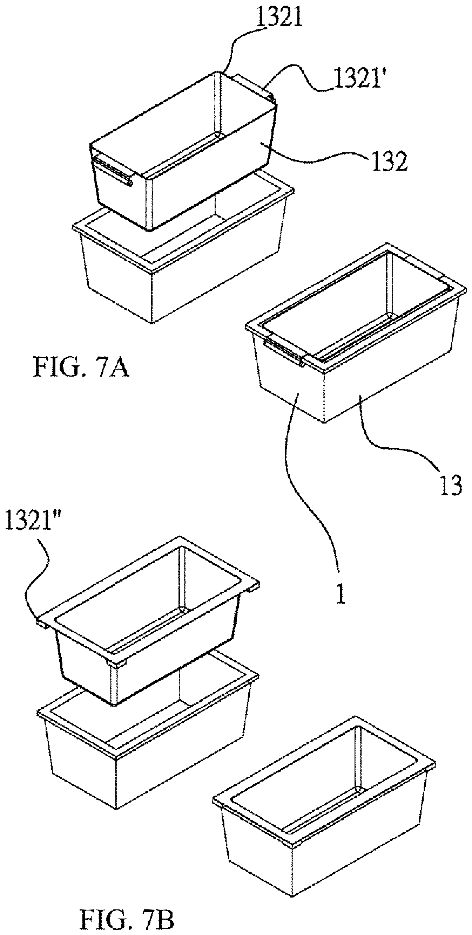

Refer to FIG. 7A and 7B, the laundry container 13 may further include a laundry bag 132 which has a handle 1321' or at least one attaching feature 1321" to allow users to put their laundry in their own laundry bag 132 without it coming in to contact with other people's laundry. Construction material of the laundry bag 132 can be hard or soft.

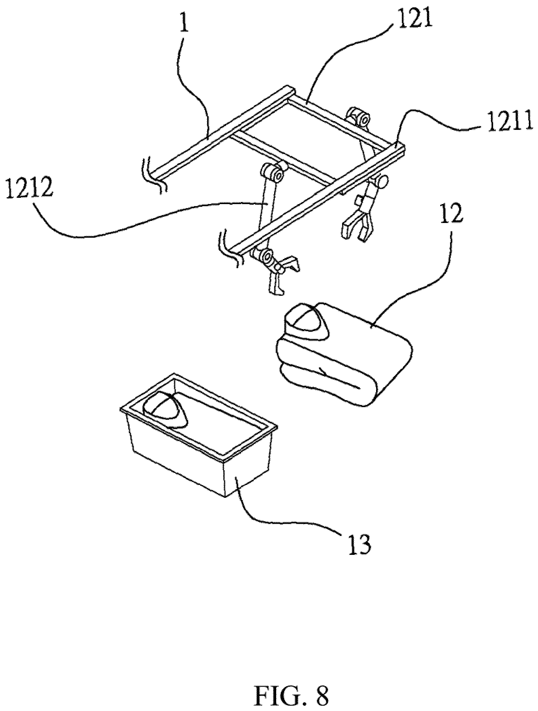

Referring to FIG. 8, the clothes cleaning system 1 may also comprise a robotic laundry folding mechanism 121, which is constructed with a track 1211 and at least one robot arm 1212 and can fold the laundry 12 and place back inside the laundry container.

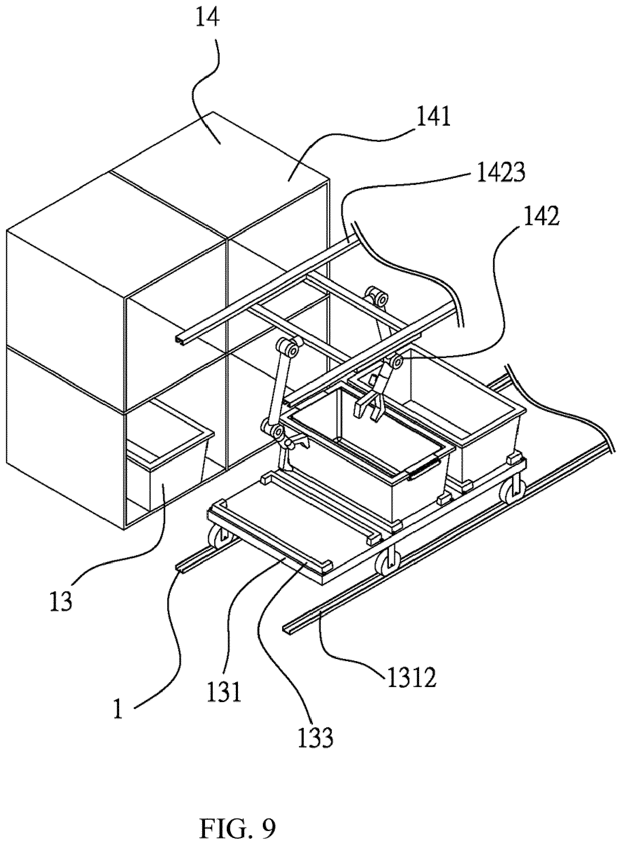

Referring to FIG. 9, the clothes cleaning system 1 may also comprise a robotic storing system 14, which is constructed with a storing system, such as shelves, grids, or rods, and at least one robotic arm 142. The computer will identify laundry container 13 and place each laundry container at a designated spot using robotic arm 142 and track 1423.

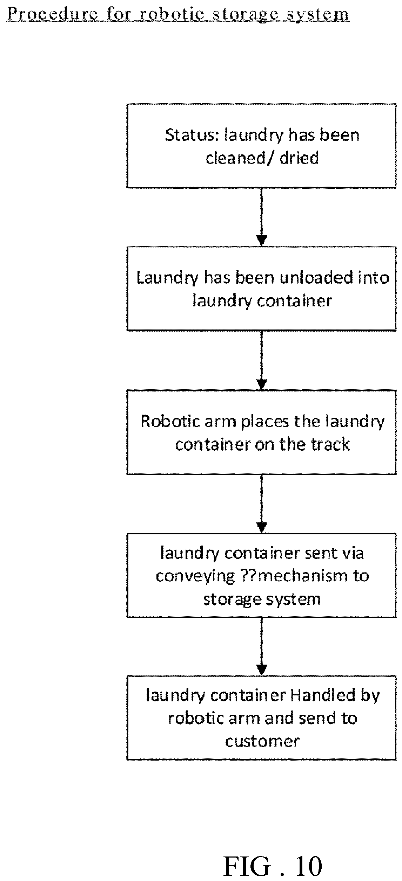

Refer to FIG. 10, according to the flow chart, laundry container 13 is conveyed on the track and stored in a designated spot and then taken out and moved to a receiving or returning port for user to retrieve. Lifting mechanism 15 can be installed to facilitate multi-layer configuration of the robotic storing system 14.

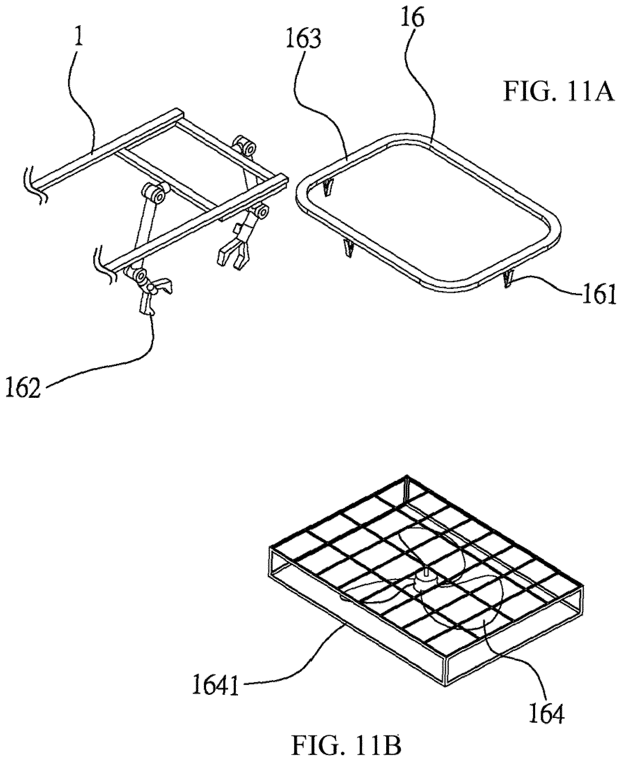

Refer to FIG 11A, clothes cleaning system 1 may further comprise a robotic laundry hanging system 16 installed either within or outside the system. The laundry hanging system 16 is constructed with multiple laundry holding device 161 , track 163 and at least one robotic arm 162 .

The laundry holding device 161 can hold the laundry 12 for storing and/ or air drying and move in sequence using track 163. The robotic arm 162 will place the laundry on the laundry holding device 161.

Referring to FIG. 11B, fan 164 can be installed to speed up the air-dry process and can also be fitted with protective net 1641.

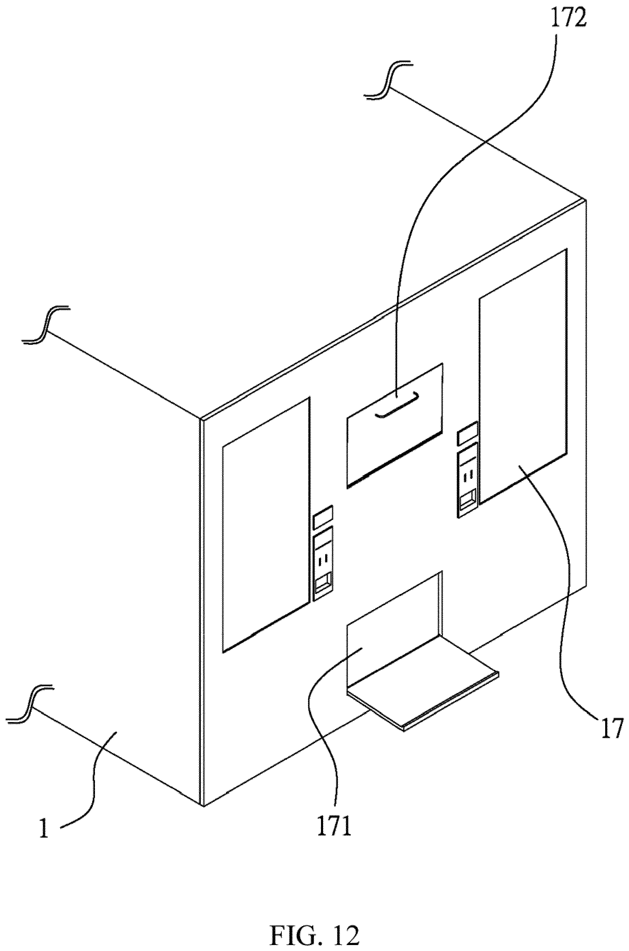

Referring to FIG. 12, a computerized user interface 17 can be installed near laundry receiving/ returning port 171 to identify customers and their laundry container or laundry bags. It will then take in the laundry via laundry receiving/ returning port 171 and send out laundry once processed via same port or laundry returning port 172.

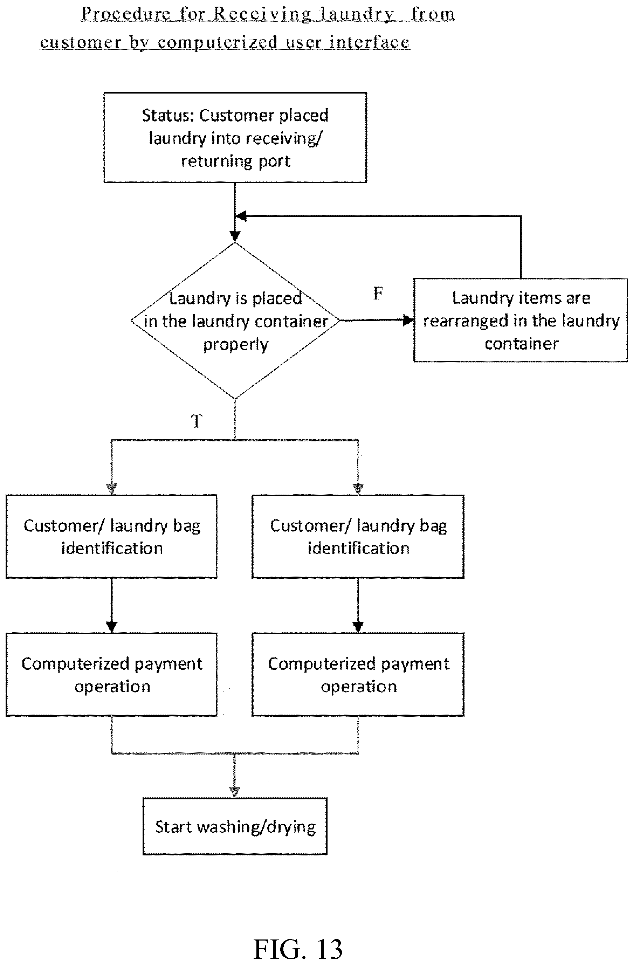

Referring to FIG. 13, the flow chart describes the procedure for receiving laundry: 1. Computer verifies if the laundry is properly placed inside laundry container. 2. Computer identifies customer and/ or their laundry bag. 3. Customer pays for the laundry service. 4. System starts washing or drying.

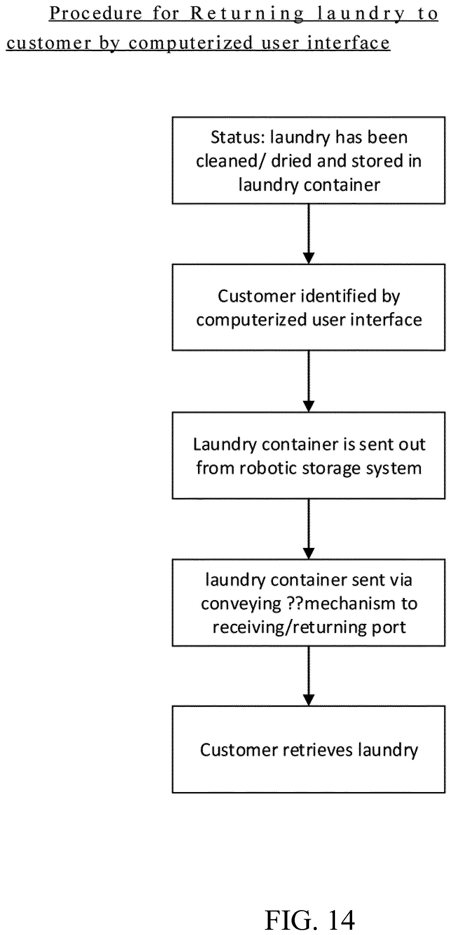

Referring to FIG. 14, the flow chart describes the procedure for returning laundry: 1. Identify customer. 2. Robotic arm 421 places the clothes basket into the clothes basket conveying device 131 and sends basket to the returning port. 3. Customer retrieves the clothes or laundry bags.

Referring to FIG. 14, the flow chart describes the procedure for the computerized user interface: 1. Identify customer and their laundry bag. 2. Retrieve relevant laundry container and place on laundry container conveying device 3. Transport laundry container to returning port for customer retrieval. System can also be configured to eject laundry container once washing process is complete even without customer presence. From there customer will have to identify their own laundry upon arrival.

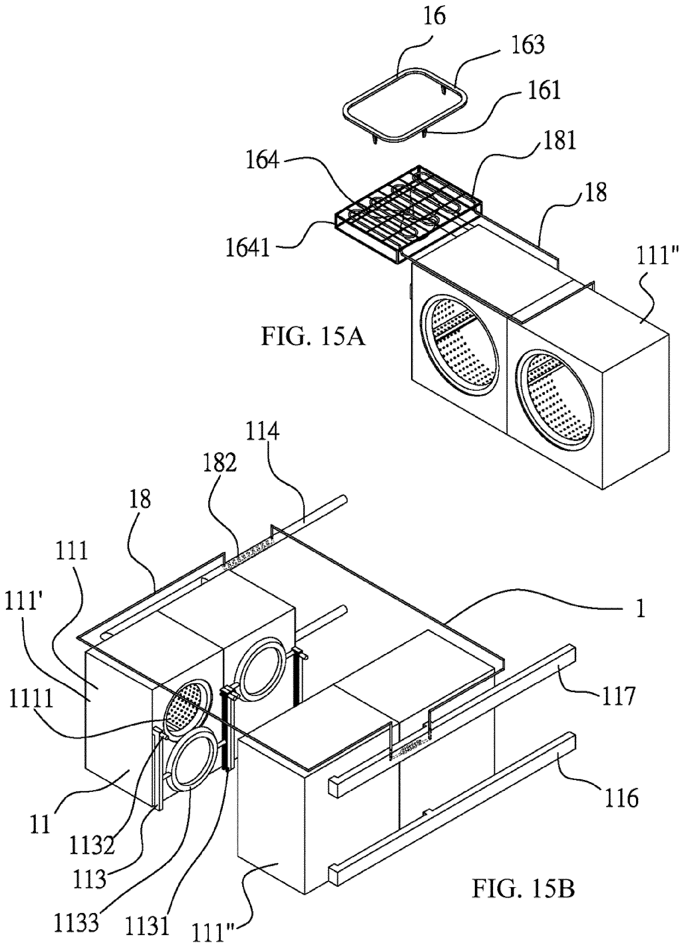

Referring to FIG. 15A and 15B, one end is fitted in the dryer or outlet pipe of the washer in order to collect waste heat and transfer it to the inlet pipe of the washer/ intake duct of the dryer for heat recovery. Recycled heat can also be sent to robotic laundry hanging system 16 to accelerate air drying process.

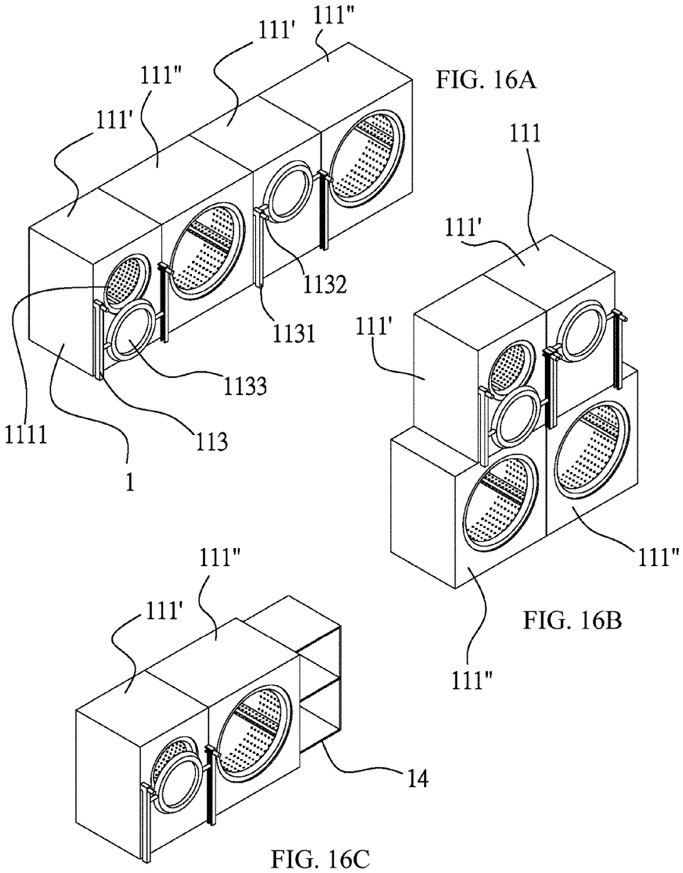

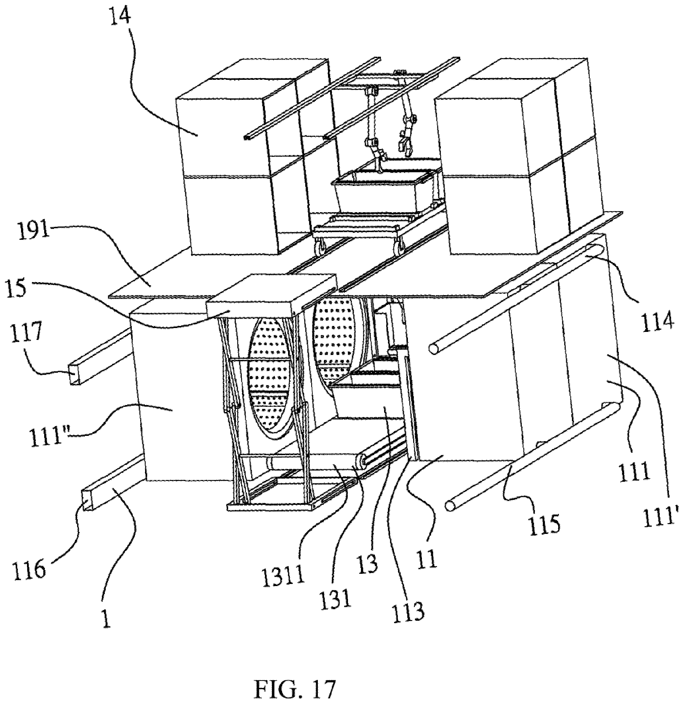

Referring to FIG. 16 and 17, laundry cleaning machine 11 has many different spatial arrangements allowing for a variety of different configurations. Units in the system can be placed in a row, stacked upon one another or configured in different zones. Zones can also be vertically separated by zone board 191, using lift 15 to transfer laundry containers between them. This will allow different zones to be separated by function.

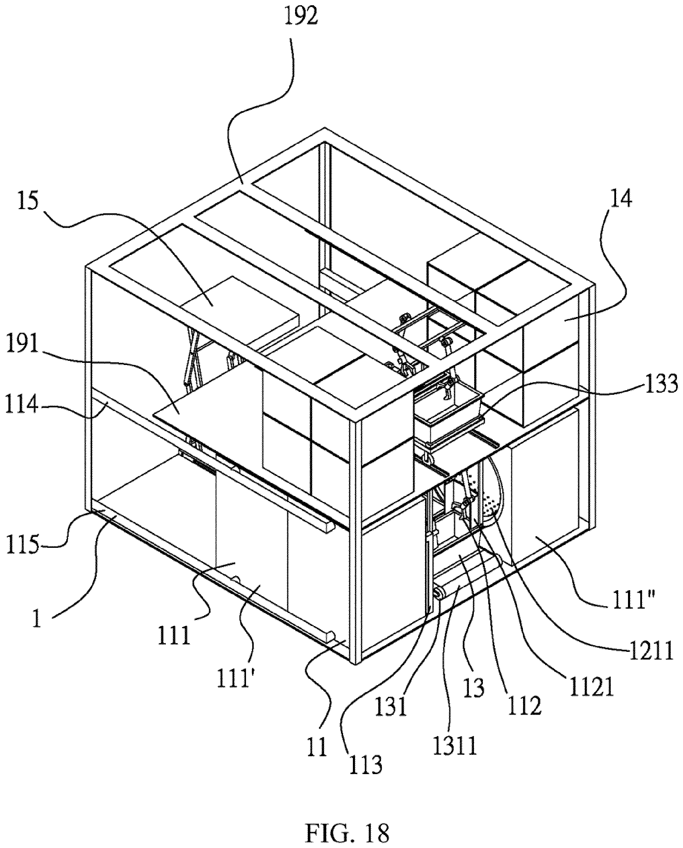

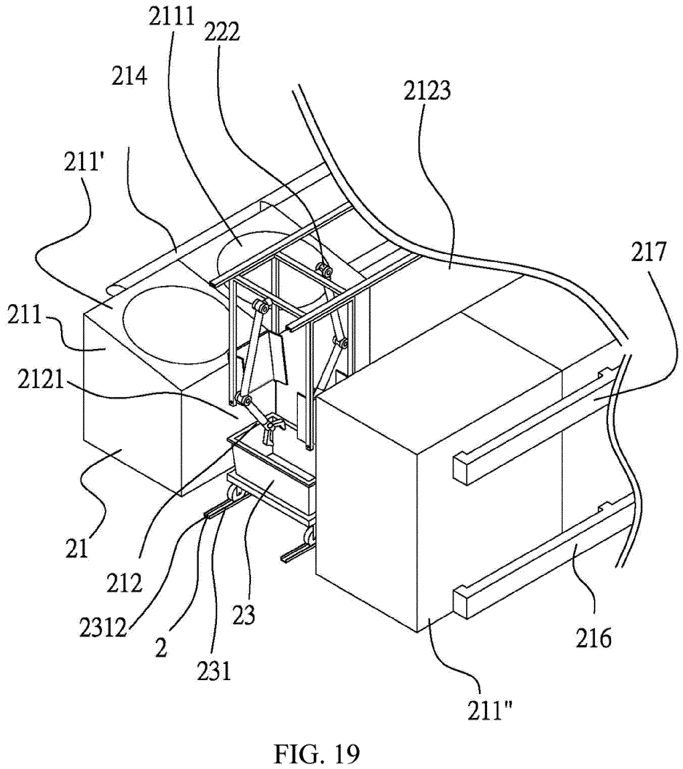

Referring to FIG. 18, framework 192 can be built around system to make it modular units to facilitate factory prefabrication and truck transportation. Referring to FIG. 19, Clothes cleaning system 2, the orientation of the washing and drying machines can be set up in a variety of different configurations.

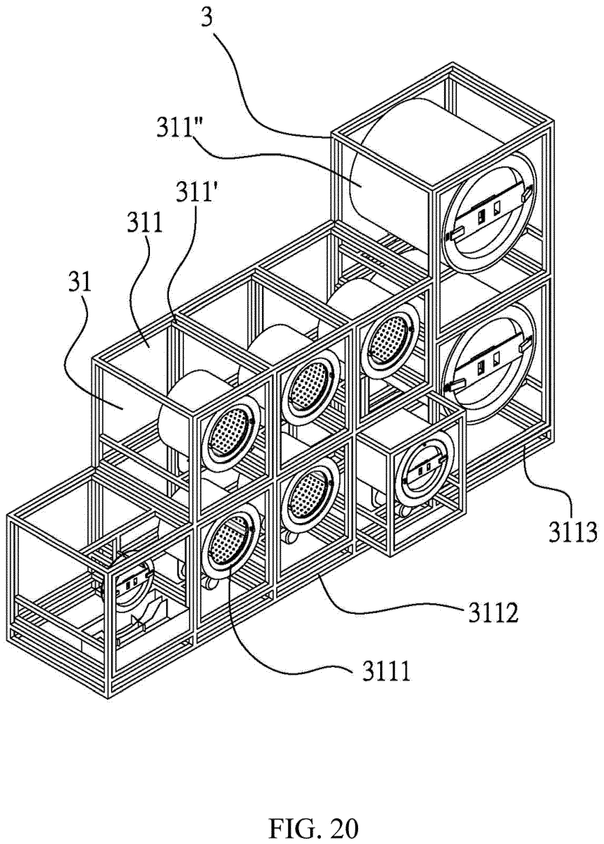

Referring to FIG. 20, Clothes cleaning system 3 may include a containing frame 3112, the purpose of which is to install laundry cleaning machine 311, to facilitate installation and removal.

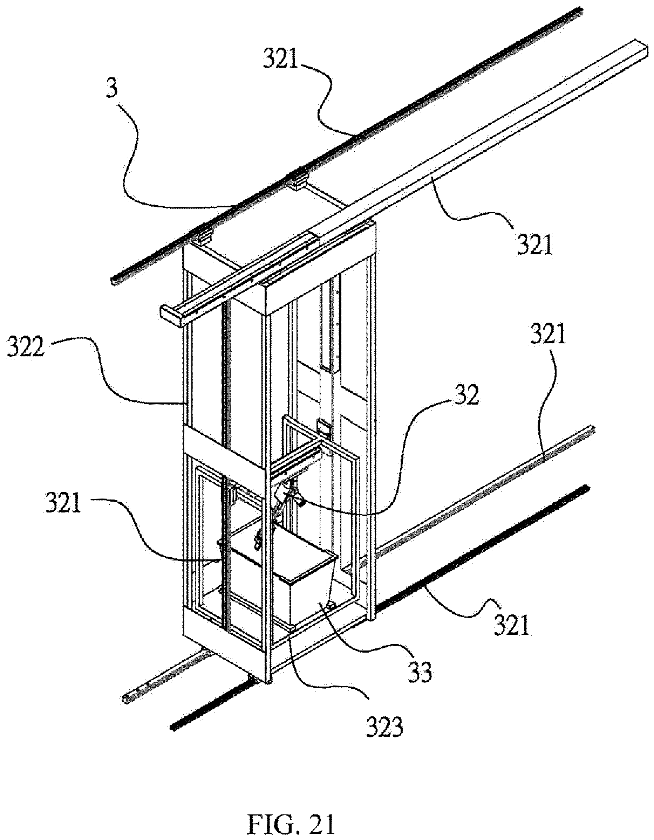

Referring to FIG. 21, the robotic arm 32 can have an external framework 322, which can be mounted on track 321 to move horizontally and/ or vertically. Within external framework 322, there can also be internal robotic framework 323 and track 321 which can be used to transport laundry container 33. Internal framework 323 and external framework 322 can both be used to transport laundry container 33. External framework 322 and internal framework 323 can also serve as a modular unit for easy installation and transportation.

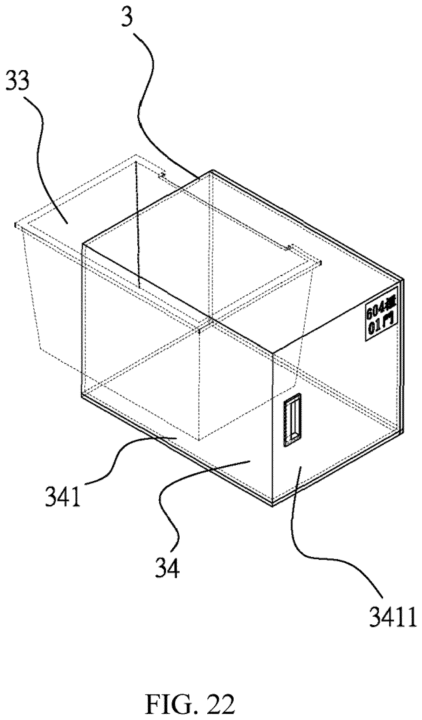

Referring to FIG. 22, Clothes cleaning system 3 can be accessed via external storage system 34 including receiving/ returning port 3411. Multiple loading/unloading ports 3411 can be installed to facilitate user access.

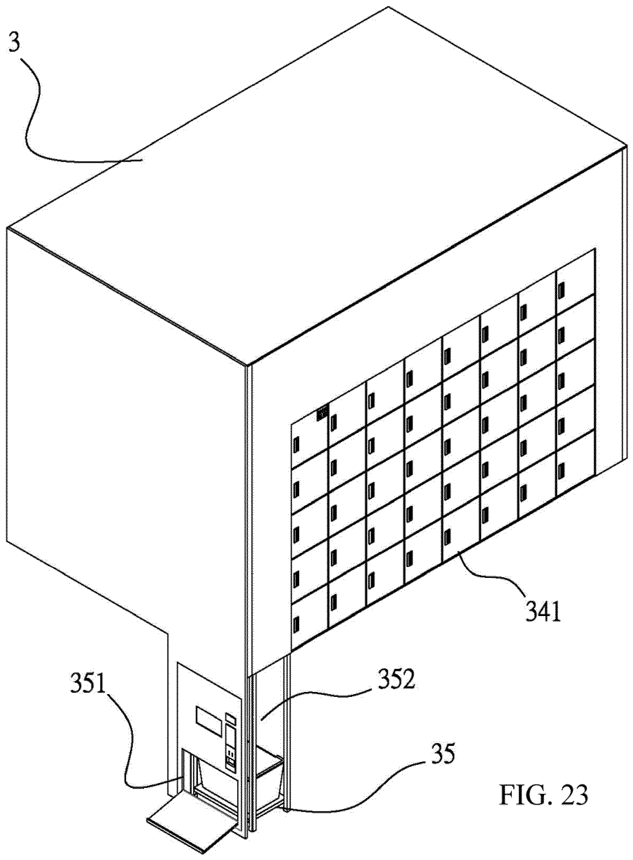

Referring to FIG. 23, Clothes cleaning system 3, receiving/ returning port 3411 can be installed at a different location, wherein conveying passage 352 will be used to transport laundry container 33 between the cleaning system and loading/unloading port. For example, loading and unloading port 351 can be set up on 1st floor, with cleaning system 3 set up on a different floor. Another way is to setup the receiving/ returning port 3411 on building exterior wall and install the clothes cleaning system 3 inside building connected via. conveying passage 352.

## Claims

1. A clothes cleaning system comprising:
at least one robotic laundry cleaning machine which consists of a laundry cleaning machine and at least one robotic arm, the laundry cleaning machine is used for cleaning and/or drying laundry, the robotic arm is used for extracting by grabbing or sucking laundry items and transferring them between a laundry container and the laundry cleaning machine; and
at least one laundry container, which consists of an accommodation space and an opening, the laundry container is used for storing laundry.

2. The clothes cleaning system according to claim 1, wherein the laundry cleaning machine is a washer, a dryer or an all-in-one washer and dryer.

3. The clothes cleaning system according to claim 2, wherein a door of the laundry cleaning machine is positioned on the side, on the top or at an angle.

4. The clothes cleaning system according to claim 1, further comprising a containing frame for easy installation and replacement of the laundry-cleaning machine.

5. The clothes cleaning system according to claim 4, the containing frame further comprising a common space to run wires or pipes.

6. The clothes cleaning system according to claim 1, further comprising a laundry container conveying device such as a conveyer belt, a track or a base with wheel, near a door of the robotic laundry cleaning machine to transport the laundry container to the opening.

7. The clothes cleaning system according to claim 6, further comprising a positioning receptacle to allow easy placement of the laundry container around the door of the laundry cleaning machine.

8. The clothes cleaning system according to claim 1, wherein the robotic arm is installed around a door of the laundry cleaning machine.

9. The clothes cleaning system according to claim 1, wherein the robotic arm is installed on a frame connected to and move around on a track around the laundry cleaning machine.

10. The clothes cleaning system according to claim 1, further comprising a laundry container conveying device for transporting the laundry containers or laundry bags between a storage system and the laundry cleaning machine.

11. The clothes cleaning system according to claim 1, further comprising a robotic laundry folding mechanism for folding the laundry.

12. The clothes cleaning system according to claim 1, further comprising a robotic storage system for storing the laundry containers at a designated spot in the system.

13. The clothes cleaning system according to claim 12, wherein the robotic storage system further comprising at least one robotic arm placed on a track to transport the laundry containers.

14. The clothes cleaning system according to claim 12, wherein the structure of robotic storage system is configured as shelf, grid or rack.

15. The clothes cleaning system according to claim 12, wherein the robotic storage system comprises a track for hanging and conveying laundry or the laundry containers.

16. The clothes cleaning system according to claim 12, wherein the robotic storage system further comprises a receiving/returning port for the user to drop off and/or pick up their laundry.

17. The clothes cleaning system according to claim 1, further comprising a robotic laundry hanging system situated either inside or outside the system to store laundry and/or allow laundry to air dry.

18. The clothes cleaning system according to claim 17, wherein the robotic storage system further comprises multiple laundry holding devices for holding laundry securely.

19. The clothes cleaning system according to claim 18, wherein the robotic storage system further comprises a track for multiple laundry holding devices to travel along.

20. The clothes cleaning system according to claim 18, wherein the robotic storage system further comprises a track for multiple laundry holding devices to travel along.

21. The clothes cleaning system according to claim 17, wherein the robotic storage system further comprises at least a robotic arm to attach or remove laundry from the laundry holding device.

22. The clothes cleaning system according to claim 1, further comprising a computerized customer interface placed around a laundry receiving/returning port to identify, receive, and return customer's laundry or the laundry container.

23. The clothes cleaning system according to claim 1, further comprising an identification scanning module for identifying customer information and the laundry container.

24. The clothes cleaning system according to claim 1, further comprising a heat exchange system to recycle heat from washer/dryer, for preheating water/air entering washer/dryer, or to send to a robotic laundry hanging system to air dry laundry.

25. The clothes cleaning system according to claim 1, wherein the configuration of the robotic laundry cleaning machine can be on the same level or a different level of a building or structure, allowing different configurations.

26. The clothes cleaning system according to claim 1, further comprising a laundry container conveying passage to allow the laundry container to be transported between the laundry receiving/ returning port and the main clothes cleaning system installed in separate zone.
